Europäisches Patentamt

European Patent Office

Office européen des brevets

(11) Veröffentlichungsnummer : **0 088 893**
B1

# (12) EUROPÄISCHE PATENTSCHRIFT

(45) Veröffentlichungstag der Patentschrift :
11.12.85

(51) Int. Cl.⁴ : **B 60 R 13/06**

(21) Anmeldenummer : **83101309.9**

(22) Anmeldetag : **11.02.83**

(54) Scheibenführung für Fahrzeuge.

(30) Priorität : **13.03.82 DE 3209206**

(43) Veröffentlichungstag der Anmeldung :
**21.09.83 Patentblatt 83/38**

(45) Bekanntmachung des Hinweises auf die Patenterteilung : **11.12.85 Patentblatt 85/50**

(84) Benannte Vertragsstaaten :
**DE FR GB IT**

(56) Entgegenhaltungen :
**GB-A- 413 686**
**US-A- 3 385 000**
**US-A- 3 703 053**

(73) Patentinhaber : **AUDI NSU AUTO UNION AKTIENGE-SELLSCHAFT**
**Felix-Wankelstrasse**
**D-7107 Neckarsulm (DE)**

(72) Erfinder : **Rossie, Egbert**
**Elias-Holl-Strasse 16**
**D-8070 Ingolstadt (DE)**
Erfinder : **Feucht, Klaus**
**Ettinger Strasse 30**
**D-8074 Gaimersheim (DE)**

(74) Vertreter : **Le Vrang, Klaus**
**AUDI NSU AUTO UNION Aktiengesellschaft Postfach**
**220 Patentabteilung**
**D-8070 Ingolstadt (DE)**

## Beschreibung

Die Erfindung bezieht sich auf eine Scheibenführung für Fahrzeuge gemäß dem Oberbegriff des Anspruchs 1.

Aus der US-A-3 703 053 ist eine Scheibenführung für eine Seitenscheibe in einem Personenkraftwagen bekannt, wobei zwei Führungspunkte die Scheibe in einer gemeinsamen Führungsschiene sowohl in Fahrzeugquer-, als auch in Fahrzeuglängsrichtung führen. Der dritte Führungspunkt führt die Scheibe in Fahrzeugquer- und Fahrzeughochrichtung und wird durch einen mit einem Fensterheber verbundenen Bolzen gebildet, welcher mit einer Kulissenführung am unteren Rand der Scheibe zusammenwirkt. Da die Scheibe in jedem Führungspunkt um eine zur umgebenden Scheibefläche etwa senkrechten Achse drehbar ist, ist jeder der drei Führungspunkte durch zwei Freiheitsgrade gekennzeichnet (Drehung und Bewegung in Fahrzeughochachse bzw. Drehung und Bewegung in Fahrzeuglängsachse bei dem Führungspunkt, welcher durch den Bolzen des Scheibehebers gebildet wird).

Mittels der in der US-A-3 703 053 gezeigten Führungspunkte lassen sich zwar Scheiben — insbesondere plane oder einfach gekrümmte Scheiben — bei Einsatz nur einer Führungsschiene auf- und abbewegen ; sollen jedoch doppelt gekrümmte Scheiben in mehr als einer Führung geführt werden, dann läßt sich das bekannte Führungssystem nicht oder nur unter Einsatz einer hohen Präzision verwenden, wenn sichergestellt sein soll, daß keine Verklemmen beim Auf- und Abbewegen der Scheibe auftreten soll.

Es ist daher Aufgabe der Erfindung, eine gattungsgemäße Scheibenführung für Fahrzeuge mit einfachen Mitteln so auszubilden, daß die Führung auch bei Einsatz von doppelt gekrümmten Scheiben mit mehreren Führungsschienen exakt definiert ist und Toleranzabweichungen nicht zu Schwergängigkeit bei der Scheibenbetätigung führen.

Die Aufgabe wird mit den kennzeichnenden Merkmalen des Anspruchs 1 gelöst.

Die erfindungsgemäße Scheibenführung ist durch nur drei Führungspunkte (einschließlich des Angriffspunktes des Scheibenhebers) gekennzeichnet, wobei für jeden Führungspunkt funktionsabhängig eine größtmögliche Anzahl von Freiheitsgraden festgelegt ist und somit keine Überbestimmung vorliegt. Beim Gegenstand der US-A-3 703 053 wirken mit nur einer Führungsschiene zwei Führungspunkte zusammen, wobei jeder Führungspunkt die Scheibe in zwei gleiche Richtungen führt. Es liegt somit eine Überbestimmung vor, welche eine hohe Paßgenauigkeit der einzelnen Bauteile erforderlich macht.

Gemäß der vorliegenden Erfindung soll derjenige Führungspunkt, welcher mit dem Scheibenhebemechanismus in Verbindung steht, einen Freiheitsgrad (Drehung), der zweite Führungspunkt zwei (Drehung, sowie in Richtung der Fahrzeughochachse) und der dritte Führungspunkt drei Freiheitsgrade (Drehung, sowie in Richtung der Fahrzeughoch- und Fahrzeuglängsachse) aufweisen.

Der Anspruch 2 kennzeichnet eine vorteilhafte Ausführungsform des die Scheibe nur in Fahrzeugquerrichtung führenden Führungspunktes.

Es Ausführungsbeispiel der Erfindung ist in der Zeichnung dargestellt und wird nachfolgend näher beschrieben. Es zeigt

Figur 1 eine versenkbare Scheibe mit drei Führungspunkten, wobei die Richtungen, in welche die jeweiligen Führungspunkte führen, durch Pfeile gekennzeichnet sind,

Figur 2 die Scheibe aus Fig. 1 in Explosionsdarstellung zusammen mit einer Fahrzeugtüre,

Figur 3 einen Schnitt durch die Scheibenführung gemäß der Linie III-III in Fig. 2,

Figur 4 einen Schnitt durch die Scheibenführung gemäß der Linie IV-IV in Fig. 2 und

Figur 5 einen Schnitt durch die Scheibenführung gemäß der Linie V-V in Fig. 2.

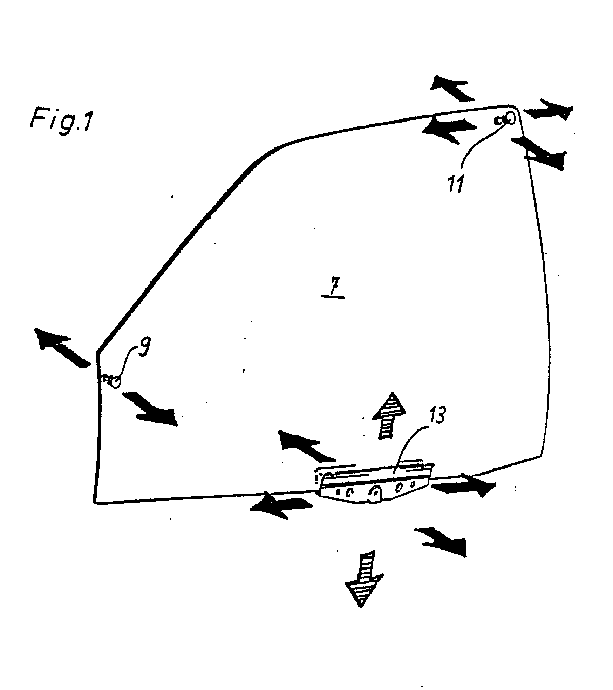

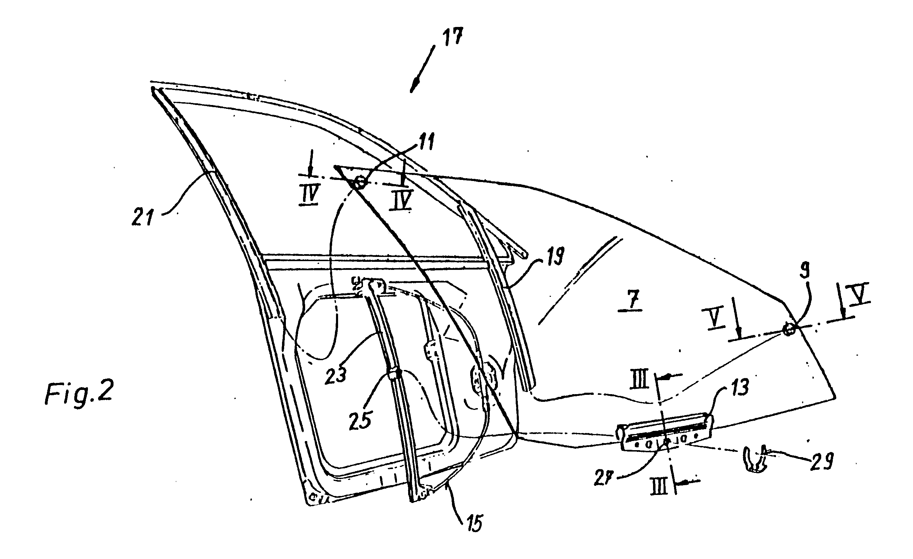

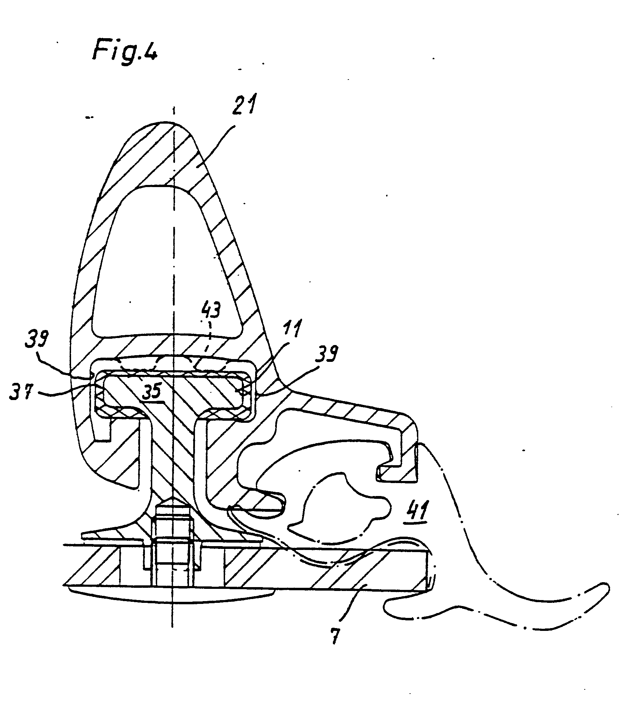

Eine in Fig. 1 dargestellte Scheibe 7 ist in ihrem vorderen und ihrem hinteren Bereich mit einem Gleitstück 9 bzw. 11 (erster bzw. zweiter Führungspunkt) versehen und trägt an ihrem unteren Rand einen Halter 13 zum Anschluß einen Scheibenhebers 15 (Fig. 2), der einen dritten Führungspunkt bildet.

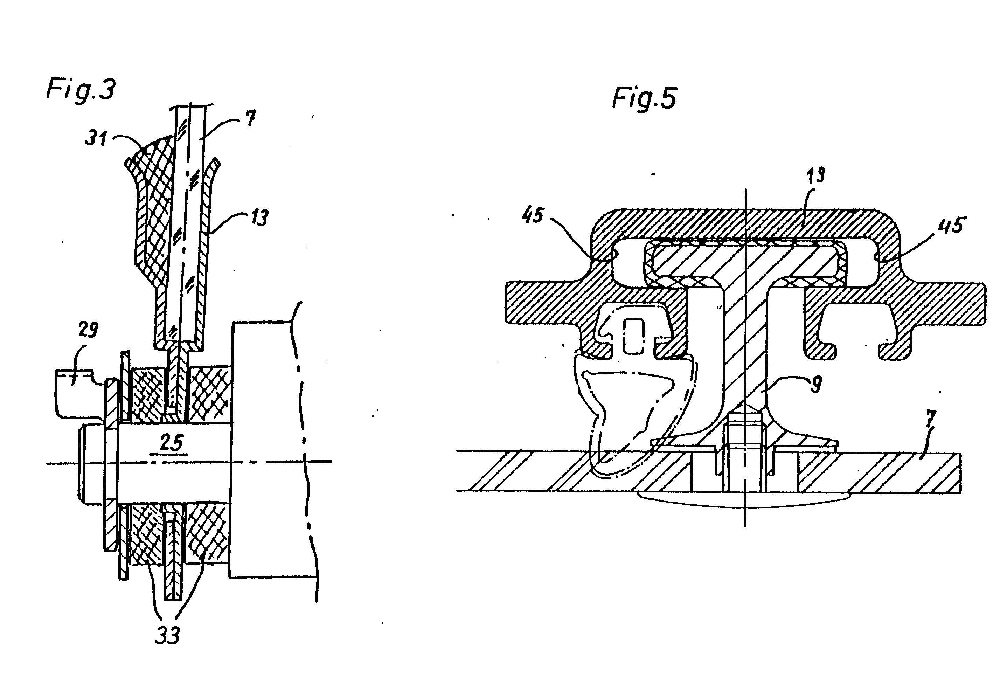

Wie aus Fig. 2 unmittelbar ersichtlich, läßt sich die Scheibe 7 in einer Seitentüre 17 montieren und in vertikaler Richtung bewegen. Dazu sind an der Seitentüre 17 eine Führungsschiene 19, welche das Gleitstück 9 aufnimmt und eine Führungsschiene 21 zur Führung des Gleitstückes 11 ausgebildet. Eine dritte Führungsschiene 23 ist Bestandteil des Scheibenhebers 15. In der Führungsschiene 23 ist eine Mitnehmerbolzen 25 verschiebbar, welcher an einem Drahtseil befestigt und über dieses durch eine nicht dargestellte Handkurbel auf- und abwärts bewegbar ist. Bei montierter Scheibe 7 ragt der Mitnehmerbolzen 25 drehbar durch eine Bohrung 27 in dem mit der Scheibe 7 verbundenen Halter 13 und ist durch einen Sicherungsring 29 im Halter 13 fixiert. Einen Schnitt durch diese Befestigungsstelle zeigt Fig. 3. Darin ist auch die Befestigung der Scheibe 7 im Halter 13 mittels eines Klebers 31, sowie die Anordnung von zwei Dämpfungsscheiben 33 zu beiden Seiten des Halters 13 erkennbar. Daraus ergibt sich, daß dieser Führungspunkt nur einen Freiheitsgrad (Drehung) besitzt.

Fig. 4 zeigt einen Schnitt durch die Scheibenführung im Bereich des Gleitstückes 11. Der kreisrunde Kopf 35 des Gleitstückes 11 ist mit einer Gleitschicht 37 überzogen und so in der als Strangpreßprofil ausgeführten Führung -21 geführt, daß eine Drehung des Gleitstückes und eine Bewegung in Richtung der Fahrzeughochachse möglich ist (zwei Freiheitsgrade). Die Führung des Gleitstückes 11 in Fahrzeuglängsrichtung übernehmen die Flanken 39 der Profilschiene, die Führung in Fahrzeugquerrichtung entweder eine an der Führung 21 befestigte Dichtung 41 oder an der entsprechenden Stelle im Profilteil angeformte Führungsstege 43 (gestrichelt gezeichnet).

Einen Schnitt durch das Gleitstück 9, welches den dritten, durch drei Freiheitsgrade (Drehung, in Fahrzeughoch- und Längsrichtung) gekennzeichneten Führungspunkt bildet, zeigt Fig. 5. Der Aufbau ist hier ähnlich dem Aufbau des letztbeschriebenen Führungspunktes, nur daß zur Ermöglichung einer Bewegung in Fahrzeuglängsrichtung die Flanken 45 der ebenfalls als Strangpreßprofil ausgeführten Führungsschiene 19 in größerem Abstand zum Gleitstück 9 verlaufen, so daß eine Bewegung des Gleitstückes 9 und damit der Scheibe 7 in Fahrzeuglängsrichtung möglich ist.

### Patentansprüche

1. Scheibenführung für Fahrzeuge, wobei die Scheibe (7) zumindest senkrecht zu ihrer Erstreckung (d. h. in Fahrzeugquerrichtung) geführt ist und in etwa vertikalen Führungen (Führungsschienen 19, 21, 23) verschiebbar ist, die Scheibe (7) dabei in Führungspunkten um eine zur umgebenden Scheibenfläche etwa senkrechte Achse drehbar ist und in Richtung ihrer Erstreckung etwa senkrecht zu ihrer Verschieberichtung (d. h. im Fahrzeuglängsrichtung) durch zwei Führungspunkte (Gleitstück 11 und Halter 13) geführt ist, dadurch gekennzeichnet, daß ein dritter Führungspunkt (Gleitstück 9) die Scheibe (7) ausschließlich in Fahrzeugquerrichtung führt und einer der die Scheibe (7) in Fahrzeuglängs- und Fahrzeugquerrichtung führenden Führungspunkte (Halter 13) mit einem Scheibenhebemechanismus (Scheibenheber 15) in Verbindung steht und die Führung der Scheibe (7) in Fahrzeughochrichtung übernimmt.

2. Scheibenführung nach Anspruch 1, dadurch gekennzeichnet, daß der die Scheibe (7) nur in Fahrzeugquerrichtung führende, dritte Führungspunkt als ein in der zugeordneten Führung (Führungsschiene 19) parallel zur Scheibe (7) verschiebbares Gleitstück (9) ausgebildet ist.

### Claims

1. Window guide mechanism for vehicles, whereby the window glass (7) is guided at least in a direction perpendicular to its surface (i. e. in the direction of the lateral vehicle axis), and moves in approximately vertical guides (guide channels 19, 21, 23), the window glass (7) is able to pivot in its guides about an axis roughly perpendicular to the surrounding glass surface, and is guided in a direction parallel to the glass surface and roughly perpendicular to its direction of movement in the guides (i. e. in the direction of the longitudinal vehicle axis) by two guide points (slide 11 and support 13), characterised in that a third guide point (slide 9) guides the window glass (7) only in the direction of the lateral vehicle axis, and one of the guide points (support 13) which guide the window glass (7) in the direction of the longitudinal and lateral vehicle axes is connected with a window lifter mechanism (window lifter 15) and guides the window glass (7) in the direction of the vertical vehicle axis.

2. Window guide mechanism in accordance with Claim 1, characterised in that the third guide point, which guides the window glass (7) only in the direction of the lateral vehicle axis, is designed as a slide (9) which moves parallel to the window glass in the corresponding guide (guide channel 19).

Fig. 5 shows a cross section of the slide 9 which forms the third guide point characterised by three degrees of freedom (pivoting, vertical and longitudinal vehicle axes). The construction of this guide point is similar to that of the guide point last described, except that, in order to allow movement in the direction of the longitudinal vehicle axis, the inside walls 45 of guide channel 19, which is also constructed as an extruded section, are spaced further away from slide 9 in order to enable movement of slide 9, and thus of window glass 7 in the direction of the longitudinal vehicle axis.

### Revendications

1. Guide-glace pour véhicules, avec lequel la glace (7) est guidée au moins perpendiculairement à son étendue (c'est-à-dire dans la direction transversale du véhicule) et peut être déplacée dans des guides à peu près verticaux (rails de guidage 19, 21, 23), la glace (7) pouvant alors pivoter en des points de guidage autour d'un axe à peu près perpendiculaire à la surface environnante de la glace et étant guidée en direction de son étendue à peu près perpendiculairement à sa direction de déplacement (c'est-à-dire dans la direction longitudinale du véhicule) par deux points de guidage (pièce coulissante 11 et support 13), caractérisé en ce qu'un troisième point de guidage (pièce coulissante 9) guide la glace (7) exclusivement dans la direction transversale du véhicule, et en ce que l'un des points de guidage qui guident la glace (7) dans les directions longitudinale et transversale du véhicule (support 13) est raccordé à un mécanisme de levage de la glace (lève-glace 15) et assure le guidage de la glace (7) dans la direction verticale du véhicule.

2. Guide-glace selon la revendication 1, caractérisé en ce que le troisième point de guidage, qui ne guide la glace (7) que dans la direction transversale du véhicule, est réalisé sous la forme d'une pièce coulissante (9) qui est déplaçable parallèlement à la glace (7) dans le guide qui lui est associé (rail de guidage 19).

Fig.1

Fig.2

Fig.4

Fig.3

Fig.5

0 088 893